# EUROPÄISCHE PATENTSCHRIFT

(11) **EP 1 032 529 B1**
(45) Veröffentlichungstag und Bekanntmachung des Hinweises auf die Patenterteilung: **29.05.2002**
(21) Anmeldenummer: 98959822.2
(22) Anmeldetag: 02.11.1998
(51) Int. Cl.: B62K 23/04, B62L 3/02, B60K 41/20, B60K 26/02

(54) **KOMBINATIONSDREHGRIFF FÜR MOTORRÄDER**
COMBINATION TWIST GRIP FOR MOTORCYCLES
POIGNEE ROTATIVE COMBINEE POUR MOTOCYCLETTES

(30) Priorität: 19.11.1997 DE 19751211
(43) Veröffentlichungstag der Anmeldung: 06.09.2000
(73) Patentinhaber: Bayerische Motoren Werke Aktiengesellschaft, 80788 München (DE)
(72) Erfinder: SCHELL, Marco, D-80797 München (DE)
(86) Internationale Anmeldenummer: EP9806919
(87) Internationale Veröffentlichungsnummer: WO9925605

(56) Entgegenhaltungen:
- US-A- 4 580 537
- US-A- 4 607 733
- US-A- 5 386 366

## Beschreibung

Die Erfindung betrifft einen Kombinationsdrehgriff für Motorräder zur wechselweisen Betätigung des Kraftstoffgemischzuführorgans und der Bremsorgane für das Vorder- und Hinterrad.

Bei einem herkömmlichen Motorrad dient der Drehgriff ausschließlich zur Betätigung des Kraftstoffgemischzuführorgans, beispielsweise einer Drosselklappe, wogegen zur Betätigung der Bremsorgane für das Vorder- und das Hinterrad ein gesonderter Hand- bzw. Fußbremshebel vorgesehen ist. Wenn der Fahrer zur Vergrößerung der Geschwindigkeit den Drehgriff nach unten verdreht, dann nimmt er die eintretende Beschleunigung durch die auf seinen Körper einwirkende Trägheitskraft wahr. Bei einer Betätigung der Vorder- und/oder Hinterradbremse erfolgt die Wahrnehmung der Verzögerung in analoger Weise. In ergonomischer Hinsicht wäre es aber wesentlich vorteilhafter, wenn der Fahrer unmittelbar von dem eine Zunahme oder eine Verringerung der Fahrgeschwindigkeit bewirkenden Betätigungsteil eine Rückmeldung erhalten würde, die ihm die Beschleunigung oder die Verzögerung des Motorrades anzeigt.

Der Erfindung liegt daher die Aufgabe zugrunde, einen gattungsgemäßen Kombinationsdrehgriff zu schaffen, der diesem Erfordernis genügt.

Die Lösung dieser Aufgabe ist im Patentanspruch 1 angegeben.

Mit der Erfindung wird ein "aktiver" Drehgriff geschaffen, der die komplette Längsdynamik, das heißt Beschleunigen und Verzögerungen des Motorrades steuert und gleichzeitig eine Rückmeldung an den Fahrer gibt. Da das auf den Drehgriff ausgeübte positive oder negative Drehmoment ein Maß für die Zunahme bzw. die Verringerung der Geschwindigkeit ist, spürt der Fahrer am Drehgriff unmittelbar die eintretende Beschleunigung oder Verzögerung des Motorrades. Der erfindungsgemäße Kombinationsdrehgriff ermöglicht daher eine enge Verbindung zwischen Fahrer und Motorrad, was der Fahrsicherheit dient. Da der Drehgriff vom Stellmotor entsprechend dem Meßwert des Geschwindigkeitssensors nachgeführt wird, ist jedem Drehwinkel eine bestimmte Fahrgeschwindigkeit zugeordnet. Um eine bestimmte Geschwindigkeit beizubehalten, braucht der Drehgriff demzufolge lediglich in einer bestimmten Winkelstellung gehalten zu werden.

Zweckmäßig Weiterbildungen der Erfindung ergeben sich aus den Unteransprüchen.

Ein Ausführungsbeispiel der Erfindung ist in den Zeichnungen dargestellt und wird nachfolgend näher erläutert. Es zeigt:

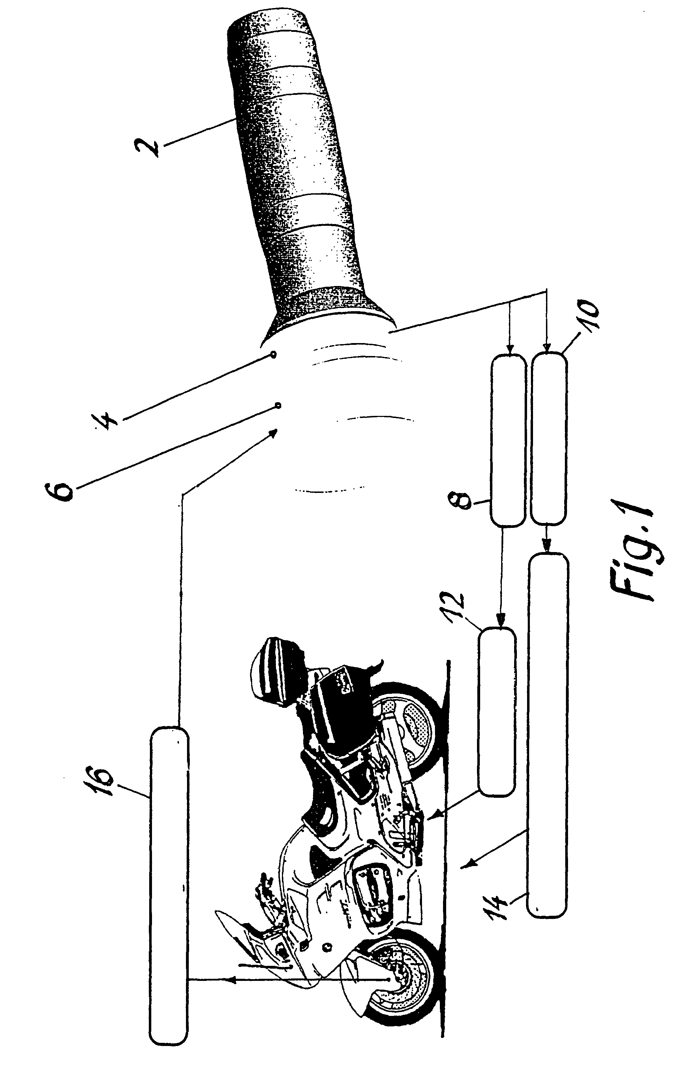

Fig. 1 eine schematische Darstellung eines Kombinationsdrehgriffs in Verbindung mit einem Blockschaltbild, und
Fig. 2 eine graphische Darstellung, die den Zusammenhang zwischen der augenblicklichen Geschwindigkeit eines Motorrades und dem Drehwinkel des Drehgriffs veranschaulicht.

Am rechten Ende des (nicht gezeigten) Lenkers sind ein Drehgriff 2, eine Drehmomentsensor 4 und ein Stellmotor 6 angeordnet. Mit dem Drehmomentsensor 4 sind eine Servoeinheit 8 zur Betätigung eines Bremssystems 12 und eine Servoeinheit 10 zur Betätigung eines Kraftstoffgemischzuführorgans 14 elektrisch verbunden. Ein Geschwindigkeitssensor 16, der die augenblickliche Geschwindigkeit des Motorrades mißt, steuert den Stellmotor 6, beispielsweise einen Schrittmotor. Das Bremssystem 12 umfaßt die Bremsorgane für das Vorder- und Hinterrad des Motorrades. Es ist ein Bremskraftverteiler vorgesehen, der selbsttätig eine geeignete Verteilung der auf das Vorder- und Hinterrad ausgeübten Bremskraft bewirkt. Bei dem Kraftstoffgemischzuführorgan 14 kann es sich um eine Drosselklappe oder um eine Einspritzeinrichtung handeln. Der Einfachheit halber wird das Organ 14 nachfolgend als Drosselklappe bezeichnet.

Der Drehgriff 2 dient sowohl zum Beschleunigen als auch zum Bremsen des Motorrades. Wenn der Fahrer das Motorrad beschleunigen, das heißt die Geschwindigkeit vergrößern will, dann übt er auf den Drehgriff 2 ein (gemäß der Darstellung nach unten gerichtetes) positives Drehmoment aus. Die Größe und die Richtung dieses Drehmoments wird vom Drehmomentsensor 4 gemessen, und das entsprechende Beschleunigungssignal wird an die Servoeinheit 10 weitergeleitet. Die Servoeinheit 10 betätigt die Drosselklappe 14 entsprechend dem Meßwert des Drehmomentsensors 4 in Öffnungsrichtung. Dem Motor wird daher mehr Brennstoff zugeführt, was sich in einer Zunahme der Motorleistung und der Geschwindigkeit des Motorrades äußert. Die augenblickliche Geschwindigkeit des Motorrades wird vom Geschwindigkeitssensor 16 gemessen, der ein entsprechendes Meßsignal an den Stellmotor 6 abgibt. Der Stellmotor 6 verdreht den damit gekoppelten Drehgriff 2 sodann um einen dem empfangenen Meßsignal entsprechenden Winkel. Die Winkelstellung des Drehgriffs 2 entspricht daher einer bestimmten Geschwindigkeit des Motorrades. Wenn der Fahrer die Beschleunigung des Motorrades beenden, das heißt die Geschwindigkeit nicht weiter vergrößern will, dann hält er den Drehgriff 2 in der erreichten Endstellung fest.

Falls die Geschwindigkeit abfällt, weil der Fahrwiderstand zunimmt, beispielsweise bei einer Steigung, dann wird der Drehgriff 2 vom Stellmotor in der Gegenrichtung verdreht. Wenn der Fahrer dieser Verdrehung jedoch entgegenwirkt, indem er auf den Drehgriff 2 ein entsprechendes positives Drehmoment ausübt, dann wird diese Zunahme des Drehmoments vom Drehmomentsensor 4 ermittelt. Das vom Drehmomentsensor 4 an die Servoeinheit 10 gelieferte Signal ändert sich demzufolge, um die Drosselklappe 14 weiter zu öffnen. Dadurch nimmt die Leistung des Motors zu, so daß die Geschwindigkeit des Motorrades konstant gehalten werden kann.

Wenn jedoch die Geschwindigkeit des Motorrades zunimmt, weil der Fahrwiderstand abnimmt, beispielsweise bei einem Gefälle, dann verdreht der Stellmotor 6 entsprechend der Veränderung des vom Geschwindigkeitssensor 16 empfangenen Signals den Drehgriff 2 in positiver Richtung. Wenn der Fahrer die Geschwindigkeit konstant halten will, dann kann er den Drehgriff 2 durch Aufbringen eines entsprechenden negativen Drehmoments in der augenblicklichen Stellung festhalten. Der Drehmomentsensor 4 ermittelt dieses negative Drehmoment und liefert ein entsprechendes Signal an die Drosselklappe 14, um diese zu schließen. Die Leistung des Motors wird daher verringert, so daß die Geschwindigkeit konstant bleibt.

Wie aus der vorstehenden Beschreibung hervorgeht, ist jeder Geschwindigkeit des Motorrades eine bestimmte Winkelstellung des Drehgriffs 2 zugeordnet. Die Geschwindigkeit des Motorrades kann daher unabhängig von dem jeweiligen Fahrwiderstand konstant gehalten werden, indem der Drehgriff 2 in seiner der gewünschten Geschwindigkeit entsprechenden Winkelstellung gehalten wird.

Wenn das Motorrad abgebremst, das heißt verzögert werden soll, dann übt der Fahrer auf den Drehgriff 2 ein (gemäß der Darstellung nach oben gerichtetes) negatives Drehmoment aus. Der Drehmomentsensor 4 ermittelt die Größe und die Richtung dieses Drehmoments und gibt ein entsprechenden Signal an die Servoeinheit 8 ab, die das Bremssystem 12 für das Vorder- und das Hinterrad des Motorrades betätigt. Die dadurch eintretende Verringerung der Geschwindigkeit wird vom Geschwindigkeitssensor 16 ermittelt, der ein entsprechendes Signal an den Stellmotor 6 liefert. Der Drehgriff 2 wird daher von dem Stellmotor 6 entsprechend verdreht oder nachgeführt. Sobald das Motorrad die gewünschte verringerte Geschwindigkeit erreicht hat, übt der Fahrer auf den Drehgriff 2 kein negatives Drehmoment mehr aus. Der Drehmomentsensor 4 liefert daher ein entsprechendes Signal an die Servoeinheit 8 zum Lösen des Bremssystems 12. Das Motorrad behält dann die der augenblicklichen Winkelstellung des Drehgriffs 2 entsprechende Geschwindigkeit bei, wie dies vorstehend erläutert wurde. Wenn der Fahrer die Geschwindigkeit wieder erhöhen will, dann übt er auf den Drehgriff 2 ein positives Drehmoment aus.

Da der Drehgriff 2 dem zum Beschleunigen bzw. zum Verzögern ausgeübten positiven oder negativen Drehmoment folgt, erhält der Fahrer eine unmittelbare Rückmeldung über die eingetretene Änderung der Fahrgeschwindigkeit.

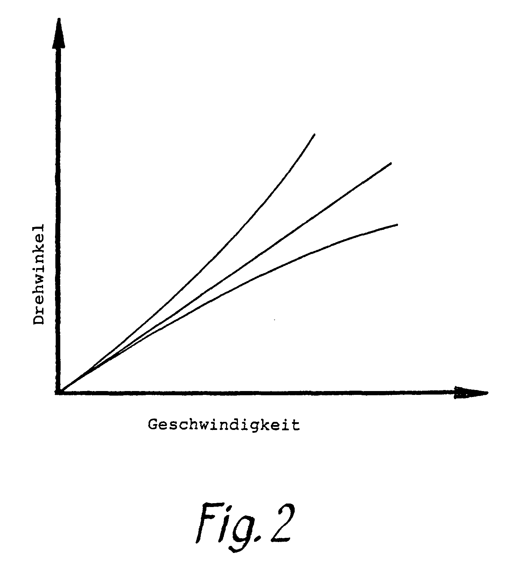

In Fig. 2 der Zeichnung ist das Verhältnis zwischen der Fahrgeschwindigkeit des Motorrades und dem Drehwinkel des Drehgriffs 2 veranschaulicht. Wie dargestellt, kann dieses Verhältnis proportional, degressiv oder progressiv sein. Diese Charakteristik kann entweder werksseitig festgelegt oder vom Fahrer einstellbar sein. Zweckmäßigerweise ist die "Härte" des Drehgriffs 2, das heißt das Verhältnis zwischen dem auf den Drehgriff 2 aufgebrachten Drehmoment und dem Verstellweg der beiden Servoeinheiten 8 und 10 einstellbar, so daß es an die persönlichen Bedürfnisse des Fahrers oder der Fahrerin angepaßt werden kann.

### Bezugszeichenliste

- 2: Drehgriff
- 4: Drehmomentsensor
- 6: Stellmotor
- 8: Servoeinheit für 12
- 10: Servoeinheit für 14
- 12: Bremssystem
- 14: Brennstoffgemischzuführorgan
- 16: Geschwindigkeitssensor

## Patentansprüche

1. Kombinationsdrehgriff für Motorräder zur wechselweisen Betätigung des Kraftstoffgemischzuführorgans und der Bremsorgane für das Vorder- und Hinterrad, **gekennzeichnet durch** einen Drehmomentsensor (4), der ein vom Fahrer auf den Drehgriff (2) ausgeübtes positives oder negatives Drehmoment zum Vergrößern bzw. zum Verringern der Geschwindigkeit mißt, zwei Servoeinheiten (8, 10), die entsprechend dem Meßwert des Drehmomentsensors (4) das Kraftstoffgemischzuführorgan (14) bzw. die beiden Bremsorgane (12) betätigen, einen Geschwindigkeitssensor (16), der die augenblickliche Geschwindigkeit des Motorrades mißt, und einen Stellmotor (6), der den Drehgriff (2) entsprechend dem Meßwert des Geschwindigkeitssensors (16) um einen bestimmten Winkel verdreht.

2. Kombinationsdrehgriff nach Anspruch 1, **dadurch gekennzeichnet, daß** den Bremsorganen (12) für das Vorder- und Hinterrad ein Bremskraftverteiler zugeordnet ist.

3. Kombinationsdrehgriff nach Anspruch 1 oder 2, **dadurch gekennzeichnet, daß** das Drehmoment-Wegverhältnis der Servoeinheiten (8, 10) voreinstellbar ist.

4. Kombinationsdrehgriff nach einem der Ansprüche 1 bis 3, **dadurch gekennzeichnet, daß** die Charakteristik der Geschwindigkeitsrückmeldung variabel ist.

## Claims

1. A combined twist handle for motorcycles for alternately actuating the fuel-mixture supply means and the means for braking the front and rear wheels, **characterised by** a torque sensor (4) which measures a positive or negative torque exerted by the driver on the twist handle (2) in order to increase or decrease the speed, two servo-units (8, 10) which actuate the fuel-mixture supply means (14) or the two brake means (12) in accordance with the value measured by the torque sensor (4), a speed sensor (16) which measures the instantaneous speed of the motorcycle, and a servomotor (6) which rotates the handle (2) through a given angle in dependence on the value measured by the speed sensor (16).

2. A combined twist handle according to claim 1, **characterised in that** the means (12) for braking the front and rear wheel are associated with a brake force distributor.

3. A combined twist handle according to claim 1 or claim 2, **characterised in that** the torque-travel ratio of the servo-units (8, 10) is presettable.

4. A combined twist handle according to any of claims 1 to 3, **characterised in that** the speed indication characteristic is variable.

## Revendications

1. Poignée rotative combinée pour motocyclette, pour l'actionnement alterné de l'organe d'alimentation en mélange combustible et des organes de freins de la roue avant et de la roue arrière,
**caractérisée par**
un capteur de couple (4) mesurant le couple positif ou négatif exercé par le conducteur sur la poignée (2) pour augmenter ou diminuer la vitesse,
deux unités d'asservissement (8, 10) qui commandent l'organe d'alimentation de mélange combustible (14) ou les deux organes (12) en fonction de la mesure fournie par le capteur de couple (4),
un capteur de vitesse (16) qui mesure la vitesse instantanée de la motocyclette et un actionneur (6) qui tourne la poignée (2) selon la valeur de mesure fournie par le capteur de vitesse (6) suivant un angle déterminé.

2. Poignée rotative combinée pour motocyclette selon la revendication 1,
**caractérisée en ce que**
l'organe de freinage (12) comporte un répartiteur de force de freinage pour la roue avant et la roue arrière.

3. Poignée rotative combinée pour motocyclette selon la revendication 1 ou 2,
**caractérisée en ce que**
le rapport de course pour le couple des unités d'asservissement (8, 10) est réglable.

4. Poignée rotative combinée pour motocyclette selon l'une des revendications 1 à 3,
**caractérisée en ce que**
la caractéristique de la réaction de vitesse est variable.
